# EUROPÄISCHE PATENTANMELDUNG

(11) **EP 2 857 207 A1**
(43) Veröffentlichungstag der Anmeldung: **08.04.2015**
(21) Anmeldenummer: 14161221.8
(22) Anmeldetag: 24.03.2014
(51) Int. Cl.: B41J 2/21, B41J 25/00, B41J 2/155

(54) **Verfahren zum Erzeugen eines aus Abschnitten zusammengesetzten Druckbildes**

(30) Priorität: 26.04.2013 DE 102013007294
(71) Anmelder: Heidelberger Druckmaschinen AG, 69115 Heidelberg (DE)
(72) Erfinder: Fischer, Jörg-Achim, 24235 Laboe (DE); Giess, Berthold, 24340 Eckernförde (DE)

(57) **Zusammenfassung**

Ein erfindungsgemäßes Verfahren zum Erzeugen eines aus Abschnitten zusammengesetzten Druckbildes auf einem zu bedruckenden Objekt mit mindestens zwei Tintenstrahl-Druckköpfen, wobei das Druckbild (4) in einer - zur Förderrichtung (x) des Objekts (5) unter einem festen, von 0° und 180° verschiedenen Winkel verlaufenden - y-Richtung aus einem ersten und einem zweiten Druckbild-Abschnitt (5a, 5b) zusammengesetzt ist, wobei ein erster Druckkopf (1a) mit ersten Tintenstrahl-Düsen (3a) Druckpunkte (6a) des ersten Abschnitts (5a) und ein zweiter Druckkopf (1b) mit zweiten Tintenstrahl-Düsen (3b) Druckpunkte (6b) des zweiten Abschnitts (5b) erzeugt, wobei die beiden Abschnitte (5a, 5b) in einem Überlapp-Bereich (7) teilweise überlappen und potentiell eine helle oder dunkle Linie (11) bilden, zeichnet sich dadurch aus, dass für jede der in y-Richtung verlaufenden Spalten (j = 1 bis p) von Druckpunkten (6a, 6b) ein erstes Feld (2a') druckender Tintenstrahl-Düsen des ersten Druckkopfes (1a) und ein - sich an das erste Feld (2a') anschließendes - komplementäres zweites Feld (2b') druckender Tintenstrahl-Düsen des zweiten Druckkopfes (1b) bestimmt wird, wobei für jede der in y-Richtung verlaufenden Spalten von Druckpunkten (6a, 6b) der Anschluss (11) der beiden Felder (2a', 2b') im Überlapp-Bereich (7) in einen hellen oder dunklen Bereich (12, 13) der Spalte gelegt wird. Potentiell störende helle oder dunkle Linien an der Anschlussstelle können so vermieden und das Druckbild in vorteilhafter Weise störungsfrei gehalten werden.

## Beschreibung

Die vorliegende Erfindung betrifft ein Verfahren mit den Merkmalen des Oberbegriffs von Anspruch 1.

Die Erfindung liegt in dem **technischen Gebiet** des Druckens mit Tintenstrahl-Technologie ("Inkjet").

Werden mit Tintenstrahl-Köpfen Bedruckstoffe oder Objekte bedruckt, die breiter als die Druckbreite der jeweiligen Köpfe sind, so ist es notwendig, mehrere Köpfe einzusetzen und diese zu "stitchen", d.h. so zu positionieren und anzusteuern, dass sich die erzeugten Druckbahnen aus Druckpunkten der einzelnen Köpfe zu einem nahtlosen Druckbild zusammenfügen. Dabei auftretenden Fehler, z.B. sichtbare helle oder dunkle Linien aufgrund von Lücken oder Überlappungen der Druckpunkte, werden "Stitching-Fehler" genannt und sind insbesondere in gerasterten Druckbildern als störend erkennbar. Besonders die hellen Linien sind fast immer erkennbar, sowohl in Vollton- als auch in Rasterflächen und insbesondere in dunklen Bereichen des Druckbildes. Dunkle Linien sind in Volltonflächen weniger erkennbar, aber in Rasterflächen. Solche Fehler gilt es zu vermeiden. Hierzu werden die Köpfe zunächst möglichst genau positioniert. Es ist auch möglich, die Köpfe fortlaufend mechanisch in ihrer Positionierung zu korrigieren, z.B. in einer Regelschleife. Eine solche Lösung ist jedoch aufwändig und teuer und kann bei hohen Produktionsgeschwindigkeiten versagen. Um den Anschluss der beiden Druckbahnen für das menschliche Auge zu verbergen, ist es auch bereits bekannt, die Stitching-Stelle fortlaufend in ihrer Lage zu variieren, z.B. entsprechend einer Funktion oder stochastisch. Aber auch solche Variationen können zu Effekten führen, die wiederum sichtbar und daher das Druckbild störend sind.

Vor diesem Hintergrund ist es **Aufgabe** der vorliegenden Erfindung, ein gegenüber dem Stand der Technik verbessertes Verfahren zu schaffen, welches es ermöglicht, Druckbahnen benachbarter Tintenstrahl-Köpfe derart aneinander anzuschließen, dass der Anschluss für das menschliche Auge nicht mehr wahrzunehmen ist.

Eine erfindungsgemäße **Lösung** dieser Aufgabe stellt ein Verfahren mit den Merkmalen von Hauptanspruch 1 dar.

Ein **erfindungsgemäßes Verfahren** zum Erzeugen eines aus Abschnitten zusammengesetzten Druckbildes auf einem zu bedruckenden Objekt mit mindestens zwei Tintenstrahl-Druckköpfen, wobei das Druckbild in einer - zur Förderrichtung des Objekts unter einem festen, von 0° und 180° verschiedenen Winkel verlaufenden - y-Richtung aus einem ersten und einem zweiten Druckbild-Abschnitt zusammengesetzt ist, wobei ein erster Druckkopf mit ersten Tintenstrahl-Düsen Druckpunkte des ersten Abschnitts und ein zweiter Druckkopf mit zweiten Tintenstrahl-Düsen Druckpunkte des zweiten Abschnitts erzeugt, wobei die beiden Abschnitte in einem Überlapp-Bereich teilweise überlappen und potentiell eine helle oder dunkle Linie bilden, **zeichnet sich dadurch aus,** dass für jede der in y-Richtung verlaufenden Spalten von Druckpunkten ein erstes Feld druckender Tintenstrahl-Düsen des ersten Druckkopfes und ein - sich an das erste Feld anschließendes - komplementäres zweites Feld druckender Tintenstrahl-Düsen des zweiten Druckkopfes bestimmt wird, wobei für jede der in y-Richtung verlaufenden Spalten von Druckpunkten der Anschluss der beiden Felder im Überlapp-Bereich in einen hellen oder dunklen Bereich der Spalte gelegt wird.

Das erfindungsgemäße Verfahren ermöglicht es mit **Vorteil,** Druckbahnen benachbarter Tintenstrahl-Köpfe derart aneinander anzuschließen, dass der Anschluss für das menschliche Auge nicht mehr wahrzunehmen ist.

Kurz gefasst beruht die Erfindung darauf, dass eine (potentielle) helle Linie an der Anschlussstelle zweier Druckköpfe in helle Bereiche des Druckbildes verlagert wird und dort für das menschliche Auge "verschwindet". Entsprechend kann eine (potentielle) dunkle Linie in dunkle Bereiche verlagert werden oder durch mechanische Verstellung eines Kopfes in y-Richtung oder durch Verschieben der Bilddaten eines Kopfes in y-Richtung (jeweils um eine Linienbreite einer Linie von Druckpunkten) in eine helle Linie überführt werden.

Erfindungsgemäß wird der Anschluss der Druckbahnen nicht stochastisch variiert, sondern auf der Grundlage einer Analyse der vorliegenden Bilddaten im Überlapp-Bereich der beiden Tintenstrahl-Köpfe variiert. Für jede Spalte wird der Anschluss in einen unkritischen Bereich gelegt, d.h. in einen Bereich, in dem der Anschluss für das menschliche Auge nicht mehr wahrzunehmen ist. Eine potentielle weiße Linie wird bevorzugt in x-Richtung zerteilt und die Teile davon werden in y-Richtung in helle oder gar weiße Bereich gelegt. Das Zerteilen kann bevorzugt für jede einzelne Spalte von Druckpunkten erfolgen.

Es wird erfindungsgemäß mit den zu druckenden Bilddaten gearbeitet, d.h. es sind keine Vorabuntersuchungen mit Testdaten erforderlich.

Es kann ferner vorgesehen sein, mittels einer zweidimensionalen Fouriertransformation der korrigierten Druckdaten zu prüfen, ob durch die Korrektur störende, d.h. sichtbare OrtsFrequenzen in den korrigierten Druckdaten erzeugt wurden. Falls ja, kann die Korrektur verworfen und einen veränderte Korrektur angewandt werden, z.B. indem zumindest teilweise andere als die zuvor ausgewählten Minima ausgewählt werden.

Alternative oder ergänzende Verfahrensschritte können sein:
1) Es wird vermieden, dass zwei ausgewählte Minima in aufeinander folgenden Spalten auf gleicher Höhe (bei gleichem y-Wert) liegen. Wenn dies der Fall sein sollte, so wird in der zweiten der beiden Spalten ein anderes Minimum gewählt, bevorzugt das zweitkleinste Minimum.
2) Die Minima werden im Raum der Minima (Datensatz MinS) nach einer vorgegebenen Funktion, z.B. einer Sinusfunktion (y = a * sin (b* x)), ausgewählt.
3) Die Minima werden im Raum der Minima (Datensatz MinS) stochastisch ausgewählt
4) Die Anschlussstellen werden nicht an die Stellen der absoluten Minima, also nicht in die hellsten Bereiche gelegt, sondern in möglichst große, zusammenhängende helle Bereiche, auch wenn diese weniger hell sind.

Vorteilhafte und daher **bevorzugte Weiterbildungen** dieser Erfindung ergeben sich aus den zugehörigen Unteransprüchen sowie aus der Beschreibung und den zugehörigen Zeichnungen.

Eine bevorzugte Weiterbildung des erfindungsgemäßen Verfahrens kann sich dadurch auszeichnen, dass zum Bestimmen des absolut hellsten oder dunkelsten Bereichs der Spalte oder des größten zusammenhängenden hellen oder dunklen Bereichs der Spalte eine Analyse der Bilddaten des Druckbildes, insbesondere im Überlapp-Bereich erfolgt.

Eine bevorzugte Weiterbildung des erfindungsgemäßen Verfahrens kann sich dadurch auszeichnen, dass zum Bestimmen des absolut hellsten oder dunkelsten Bereichs der Spalte oder des größten zusammenhängenden hellen oder dunklen Bereichs der Spalte eine Segmentierung erfolgt.

Eine bevorzugte Weiterbildung des erfindungsgemäßen Verfahrens kann sich dadurch auszeichnen, dass zum Vermeiden des Entstehens von wahrnehmbaren Ortsfrequenzen und/oder anderer wahrnehmbarer Störungen für einige Spalten von Druckpunkten der Anschluss der beiden Felder im Überlapp-Bereich in den zweit oder dritt hellsten oder dunkelsten Bereich der Spalte oder in den zweit oder dritt größten zusammenhängenden hellen oder dunklen Bereich der Spalte gelegt wird.

Eine bevorzugte Weiterbildung des erfindungsgemäßen Verfahrens kann sich dadurch auszeichnen, dass die hellen oder dunklen Bereiche aufeinander folgender Spalten nach einer vorgegebenen Funktion, insbesondere nach einer Sinusfunktion ausgewählt werden.

Eine bevorzugte Weiterbildung des erfindungsgemäßen Verfahrens kann sich dadurch auszeichnen, dass die hellen oder dunklen Bereiche aufeinander folgender Spalten stochastisch ausgewählt werden.

Eine bevorzugte Weiterbildung des erfindungsgemäßen Verfahrens kann sich dadurch auszeichnen, dass in Volltonbereichen des Druckbildes der Anschluss der beiden Felder im Überlapp-Bereich stochastisch gelegt wird.

Eine bevorzugte Weiterbildung des erfindungsgemäßen Verfahrens kann sich dadurch auszeichnen, dass das Verfahren iterativ durchgeführt wird, bis keine wahrnehmbaren Störungen mehr vorliegen. Es kann also vorgesehen sein, ein erfindungsgemäß analysiertes und (Stitching-) korrigiertes Druckbild - iterativ - einer oder mehrerer weiterer Analysen und Korrekturen zu unterziehen und so das Ergebnis weiter zu verbessern.

Eine bevorzugte Weiterbildung des erfindungsgemäßen Verfahrens kann sich dadurch auszeichnen, dass das Verfahren beim Drucken mehrfarbiger Druckbilder für jeden Farbauszug separat durchgeführt wird und geprüft wird, ob beim Überlagern der Druckbilder wahrnehmbare Störungen entstehen. Beim Drucken von mehrfarbigen Druckbildern, z.B. im Vierfarbdruck mit den bekannten CMYK-Druckfarben, kann also geprüft werden, ob durch die Überlagerung der korrigierten Druckbilder (der einzelnen Farbauszüge) sichtbare Störungen entstehen. Falls ja, können auch solche potentiellen Fehler durch eine veränderte Korrektur in den einzelnen Farbauszügen umgangen werden.

Das oben genannte erfindungsgemäße Verfahren kann auch durch folgenden Hauptanspruch bzw. dessen Merkmalskombination beschrieben werden: Verfahren zum Erzeugen eines zusammengesetzten Druckbildes, wobei die beiden Abschnitte in einem Überlapp-Bereich teilweise überlappen, dadurch gekennzeichnet, dass eine helle Anschluss-Stelle in einen hellen Bereich gelegt wird oder dass eine dunkle Anschluss-Stelle in einen dunklen Bereich gelegt wird.

Die beschriebene Erfindung gemäß Hauptanspruch und die beschriebenen, vorteilhaften Weiterbildungen der Erfindung stellen auch in Kombination miteinander vorteilhafte Weiterbildungen der Erfindung dar.

Im Rahmen der Erfindung ist auch eine Bedruckstoff verarbeitende Maschine - z.B. eine Druckmaschine oder ein Drucker zum Bedrucken von flachen oder gekrümmten Objekten, wie Bogen, Bahnen oder Verpackungen - zu sehen, welche zur Durchführung des oben genannten erfindungsgemäßen Verfahrens technisch ausgestattet ist, also z.B. Tintenstrahl-Köpfe und eine Steuerung aufweist.

Im Rahmen **alternativer Lösungen** kann vorgesehen sein, Verpackungsanlagen oder Abfüllanlagen mit einer Vorrichtung zu versehen, welche zur Durchführung des oben genannten erfindungsgemäßen Verfahrens technisch ausgestattet ist, also z.B. Tintenstrahl-Köpfe und eine Steuerung aufweist, und die Verpackungen oder zu füllenden Behälter, z.B. Flaschen, erfindungsgemäß bedruckt.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben.

Die **Zeichnungen** zeigen:
- Figur 1: Eine schematische Darstellung eines bevorzugten Ausführungsbeispiels einer Vorrichtung zur Durchführung des erfindungsgemäßen Verfahrens;
- Figur 2: Einen Ablaufplan eines bevorzugten Ausführungsbeispiels des erfindungsgemäßen Verfahrens;
- Figur 3a-3c: Ein Druckbild mit sichtbarer Stitching-Stelle und erfindungsgemäß veränderter und daher nicht sichtbarer Stitching-Stelle; und
- Figur 4a-4c: Ein Druckbild mit sichtbarer Stitching-Stelle und erfindungsgemäß veränderter und daher nicht sichtbarer Stitching-Stelle.

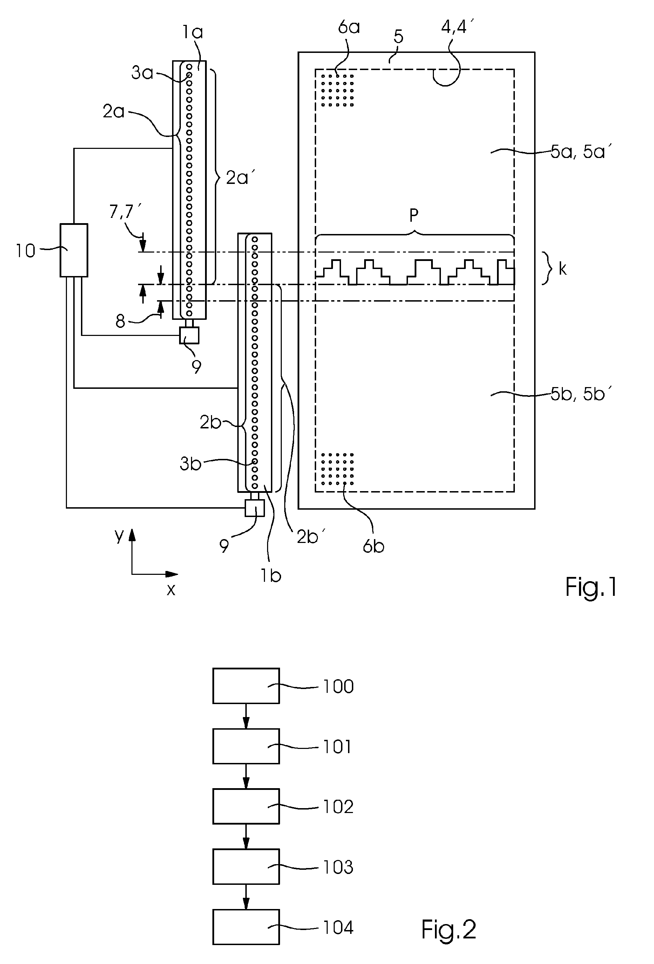

**Figur 1** zeigt einen ersten und einen zweiten Tintenstrahl-Kopf 1a und 1b (im Folgenden jeweils kurz als "Kopf" bezeichnet) mit Feldern 2a und 2b von Tintenstrahl-Düsen 3a und 3b. Die Anzahl der Düsen pro Kopf bzw. die Anzahl der korrespondierenden Druckpunkte in y-Richtung sei mit N bezeichnet. Die Köpfe erzeugen ein Druckbild 4 (bzw. dessen Druckpunkte) auf einem zu bedruckenden Objekt 5, bevorzugt auf einem flachen, im Wesentlichen zweidimensionalen Bedruckstoff (z.B. Papier, Karton, Folie als Bogen oder Bahn) oder einem dreidimensionalen Körper (z.B. Kunststoff-/Glas-Flasche, Kunststoff-/Karton-Behälter). Das Druckbild weist in der y-Richtung einen ersten und einen zweiten Abschnitt 5a und 5b mit jeweiligen Druckpunkten 6a und 6b auf, die jeweils einem Kopf zugeordnet werden können. Die Druckpunkte können sich auch aus mehreren kleineren, von einzelnen Tintenstrahl-Tropfen erzeugten Pixeln zusammensetzen. Figur 1 zeigt auch die Förderrichtung x des Objekts und die dazu unter einem festen, von 0° und 180° verschiedenen Winkel verlaufende y-Richtung, zu der die Köpfe parallel angeordnet sind. Im gezeigten Beispiel ist der Winkel etwa 90°, er kann aber auch z.B. etwa 45° oder etwa 135° sein. Weiterhin ist in Figur 1 erkennbar, dass die beiden Köpfe und somit auch die von diesen erzeugten Abschnitte 5a und 5b in einem Überlapp-Bereich 7 (auch "Stitching-Zone" genannt) teilweise überlappen. Die Anzahl der Düsen jedes Kopfes im Überlapp-Bereich bzw. die Anzahl der korrespondierenden Druckpunkte in y-Richtung sei mit k bezeichnet. Die Anzahl der Druckpunkte (z.B. des Druckbildes) in x-Richtung sei mit p bezeichnet. Der Überlapp-Bereich weißt somit k * p Druckpunkte, d.h. k Zeilen und p Spalten, auf (k in y-Richtung und p in x-Richtung). Die Köpfe (oder wenigstens einer der beiden Köpfe) können in y-Richtung mechanisch verstellt werden und somit ihre Positionierung zueinander verändert werden, was durch die mechanische Korrekturzone 8 angedeutet ist. Entsprechend ist wenigstens ein Aktor 9 für die Verstellung vorgesehen. Dem Druckbild entspricht ein Datensatz 4', der die zu druckenden Bilddaten enthält, z.B. in Form einer so genannten Bitmap. Ebenso entspricht dem ersten Abschnitt ein Datensatz 5a', dem zweiten Abschnitt ein Datensatz 5b' und dem Überlapp-Bereich ein Datensatz 7', wobei letzter eine dem Überlapp-Bereich entsprechende Größe von k * p hat. Die beiden Köpfe sind jeweils mit einer Steuerung 10 verbunden. Auch der bzw. die Aktoren sind mit der Steuerung verbunden.

**Figur 2** zeigt einen Ablaufplan für den Fall, dass eine störende weiße Linie vorliegt.

In **Schritt 100** (Vorbereiten) wird zunächst eine mechanische Verstellung der Köpfe 1a und 1b vorgenommen. Dabei wird die potentielle Lücke (helle Linie) oder die potentielle Überlappung (dunkle Linie) so weit reduziert, dass deren Breite, d.h. der Restfehler nach erfolgter mechanischer Korrektur, kleiner als eine Linienbreite (Linie aus aufeinander folgenden Druckpunkten in x-Richtung) ist. Es kann bevorzugt immer auf einen Restfehler mit einer resultierenden hellen Linie korrigiert werden. Im hier beschriebenen Beispiel soll daher von einer hellen Linie ausgegangen werden. Der Fall einer dunklen Linie lässt sich entsprechend behandeln. Für diesen vorbereitenden Verfahrensschritt kann es dienlich sein, (iterativ) ein Testmuster zu drucken und dieses kameratechnisch zu erfassen und rechentechnisch auszuwerten, um helle oder dunkle Linien zu erkennen und zu reduzieren.

In **Schritt 101** (Bereitstellen) werden die k (d.h. i = 1 bis k) Zeilen-Daten aller Spalten p (d.h. j = 1 bis p) bereitgestellt. Das **Bereitstellen** kann durch Laden der Daten aus einem ersten Speicher in einen zweiten, verarbeitenden Speicher erfolgen. Die Daten können als Grauwerte (z.B. 0 bis g) bereit gestellt werden. 0 bedeutet dabei "keinen Druckpunkt setzen" (also 0% Farbe), g bedeutet "einen Druckpunkt setzen" (also 100% Farbe).

In **Schritt 102** (Segmentieren) erfolgt eine **Segmentierung** der i = 1 bis k Zeilen-Daten für jede Spalte j = 1 bis p: Die Grauwerte jeder Spalte j können dabei zusammen als ein Grauwert-Verlauf aufgefasst werden und die Segmentierung dieses Verlaufs führt zu einer Menge Sp von Minima im Verlauf. Wird für eine Spalte j kein Minimum gefunden, weil z.B. eine Vollton-Linie vorliegt, so wird ein Minimum an einer Stelle i definiert, z.B. durch zufällige Auswahl von i.

In **Schritt 103** (Bestimmen der absoluten Minima) wird für jede Spalte j aus der Menge Sp das **absolute Minimum** Sₘₘ ausgewählt. Werden mehrere absolute Minima mit gleichem Grauwert ausgewählt, so wird dasjenige absolute Minimum Sₘᵢₙ ausgewählt, das am nächsten zur weißen Linie liegt. Die weiße Linie liegt dabei bei i=1 in x- bzw. p-Richtung. Werden in zwei aufeinander folgenden Spalten j an denselben Stellen i absolute Minima ausgewählt, so wird in der zweiten der beiden Spalten ein anderes Minimum ausgewählt, bevorzugt das zweitkleinste Minimum in der Menge Sp. Dann wird ein Datensatz MinS der Größe k * p erzeugt, der alle zuvor bestimmten absoluten Minima Sₘₘ enthält.

In **Schritt 104** (Erstellen der Korrektur-Datensätze) werden mit Hilfe des Datensatzes MinS **zwei Korrektur-Datensätze** erzeugt: einer für den ersten und einer für den zweiten Kopf 1a und 1b. Der erste Korrekturdatensatz enthält die zu druckenden Bilddaten des ersten Kopfes 1a für den Überlapp-Bereich 7. Der zweite Korrekturdatensatz enthält die komplementären (und sich daher anschließenden) zu druckenden Bilddaten des zweiten Kopfes 1b für den Überlapp-Bereich 7. Für jede Spalte j der Korrekturdatensätze gilt: die Druckpunkte von i = 1 bis zum i-Wert des für die palte j ausgewählten absoluten Minimum Sₘᵢₙ werden mit Düsen des ersten Kopfes 1a (erstes Feld druckender Düsen 2a') gedruckt und die restlichen Druckpunkte vom i-Wert des ausgewählten absoluten Minimum Sₘᵢₙ + 1 bis i = k werden vom zweiten Kopf 1b (zweites Feld druckender Düsen 2b') gedruckt. Entsprechend sind in den Korrekturdatensätzen die Bilddaten vorgesehen.

Somit wird erfindungsgemäß für jede der in y-Richtung verlaufenden Spalten von Druckpunkten der Anschluss der beiden Felder im Überlapp-Bereich in einen hellen oder dunklen Bereich der Spalte gelegt wird. Dies bedeutet: Sofern ohne vollständige erfindungsgemäße Korrektur bzw. nach Schritt 100 , d.h. potentiell, eine in x-Richtung durchgehende helle Linie wahrgenommen werden könnte, wird der Anschluss in helle Bereiche gelegt und dadurch in seiner Wahrnehmbarkeit verringert. Entsprechend wird erfindungsgemäß bei einer dunklen Linie vorgegangen; diese wird entweder entsprechend Schritt 100 in eine helle Linie verändert und in helle Bereiche gelegt oder als dunkle Linie belassen und in dunkle Bereiche gelegt.

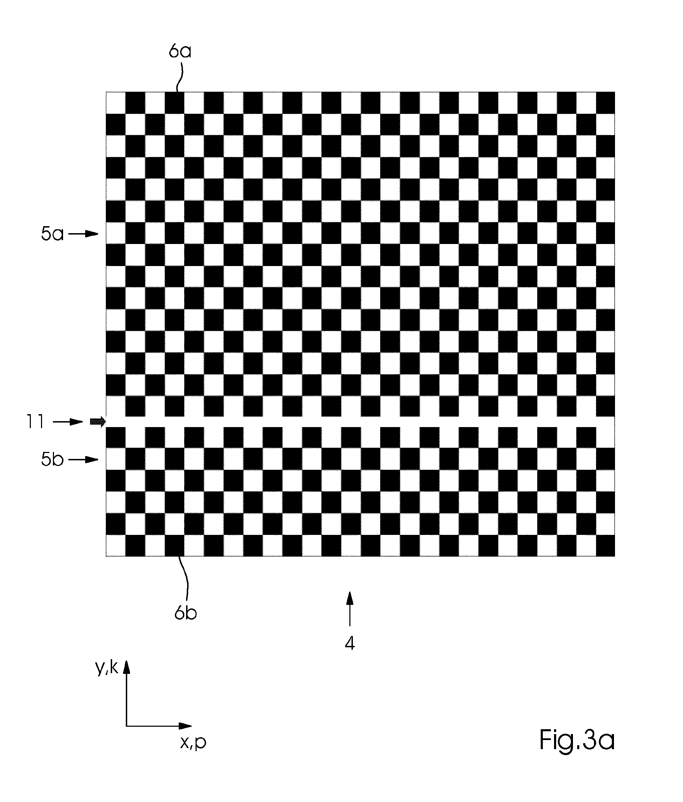

**Figur 3a** zeigt vergrößert ein gerastertes Druckbild 4 (vor der erfindungsgemäßen Korrektur) aus Druckpunkten 6a und 6b (schematisch als schwarze Quadrate dargestellt), das aus zwei Abschnitten 5a und 5b zusammengesetzt ist. Die Druckpunkte bilden Spalten p und Zeilen k. Die beiden Abschnitte bilden eine Anschlussstelle 11, welche als helle Linie im Druckbild erkennbar ist. Es ist zudem erkennbar, dass die Breite der Anschlussstelle in y-Richtung aufgrund der (in Schritt 100 erfolgenden) Positionierung der Druckköpfe weniger als die Breite eines Druckpunktes beträgt.

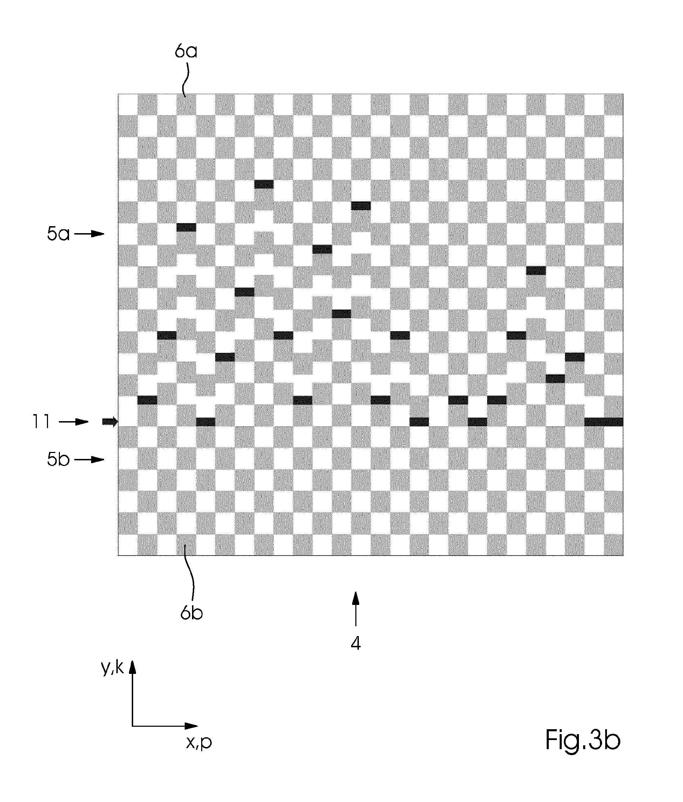

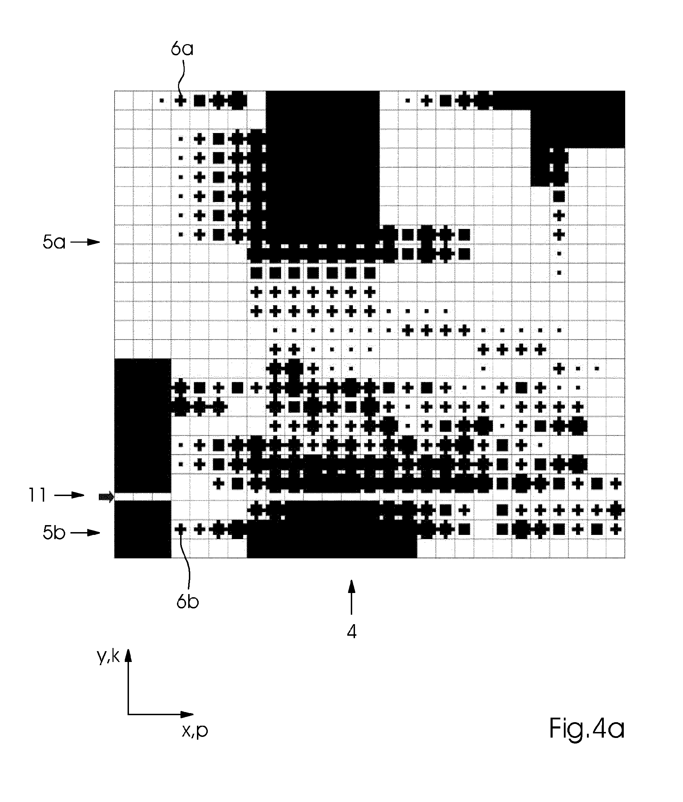

**Figur 3b** zeigt das Druckbild 4, bei welchem die potentielle helle Linie der Anschlussstelle 11 gemäß der Schritte 101 bis 104 "aufgebrochen" wurde und die einzelnen Teile (schematisch als schwarze Rechtecke dargestellt) im Druckbild verteilt zu liegen kommen. Der besseren Erkennbarkeit wegen ist die Linie, bzw. sind deren Teile in dieser Figur schwarz dargestellt und die weiteren Druckpunkte grau. Bei dem hier zur Veranschaulichung gewählten schachbrettartigen Raster wird das erfindungsgemäße Vorgehen noch nicht vollständig erkennbar, das es keine größeren, zusammenhängenden hellen Bereiche gibt, in die die Teile adressiert werden können, bzw. alle hellen Bereiche sind gleich groß (nämlich genau eine Zelle). Deutlicher erkennbar wird das erfindungsgemäße Vorgehen in den Figuren 4a bis 4c.

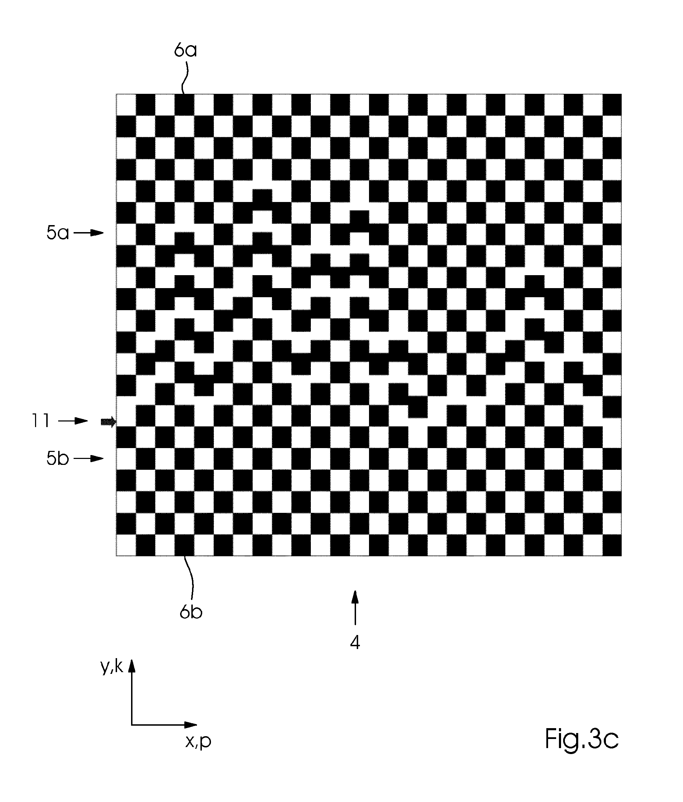

**Figur 3c** zeigt dasselbe Druckbild 4, jedoch sind die Teile der potentiellen hellen Linie nun nicht mehr dunkel hervorgehoben, so dass erkennbar wird, wie die potentielle helle Linie für das menschliche Auge in ihrer Wahrnehmbarkeit reduziert ist. Nun ist der Vorteil der Erfindung gut zu erkennen.

**Figur 4a** zeigt (vergleichbar Figur 3a) vergrößert ein gerastertes Druckbild 4 (vor der erfindungsgemäßen Korrektur) aus Druckpunkten 6a und 6b (schematisch als schwarze Einheiten dargestellt), das aus zwei Abschnitten 5a und 5b zusammengesetzt ist. Die einzelnen Druckpunkte können dabei aus unterschiedlichen Anzahlen von Pixeln zusammengesetzt sein. Die Druckpunkte bilden Spalten p und Zeilen k. Die beiden Abschnitte bilden eine Anschlussstelle 11, welche als helle Linie im Druckbild erkennbar ist. Es ist zudem erkennbar, dass die Breite der Anschlussstelle in y-Richtung aufgrund der (in Schritt 100 erfolgenden) Positionierung der Druckköpfe weniger als die Breite eines Druckpunktes beträgt.

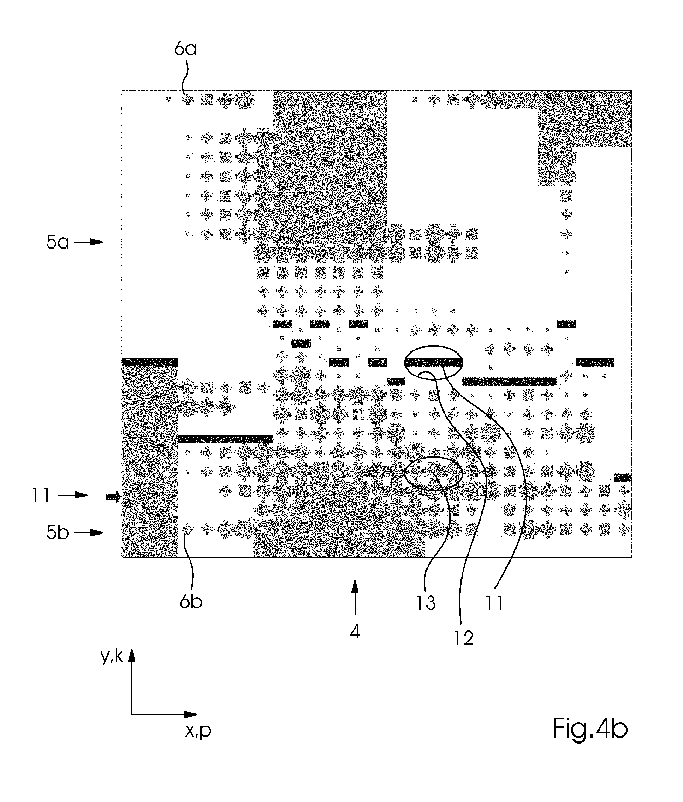

**Figur 4b** zeigt (vergleichbar Figur 3b) das Druckbild 4, bei welchem die potentielle helle Linie der Anschlussstelle 11 gemäß der Schritte 101 bis 104 "aufgebrochen" wurde und die einzelnen Teile (schematisch als schwarze Rechtecke dargestellt) im Druckbild verteilt zu liegen kommen. Der besseren Erkennbarkeit wegen ist die Linie, bzw. sind deren Teile in dieser Figur schwarz dargestellt und die weiteren Druckpunkte grau. Deutlich ist zu erkennen, dass die schwarzen Rechtecke in helle Bereiche des Druckbildes adressiert wurden. Eine stochastische Adressierung könnte stattdessen nachteilig dazu führen, dass die Teile der potentiellen hellen Linie in dunklen Bereichen zu liegen kommen, z.B. in dem großen dunklen Bereich am oberen Rand des Druckbildes. Dort wären Teile der hellen Linie für das menschliche Auge deutlich wahrnehmbar und daher das Druckbild störend. In Figur 4b sind beispielhaft ein heller Bereich 12 und ein dunkler Bereich 13 markiert. Die Anschlussstellen 11 der potentiell hellen Linie liegen erkennbar und mit Vorteil im hellen und nicht im dunklen Bereich.

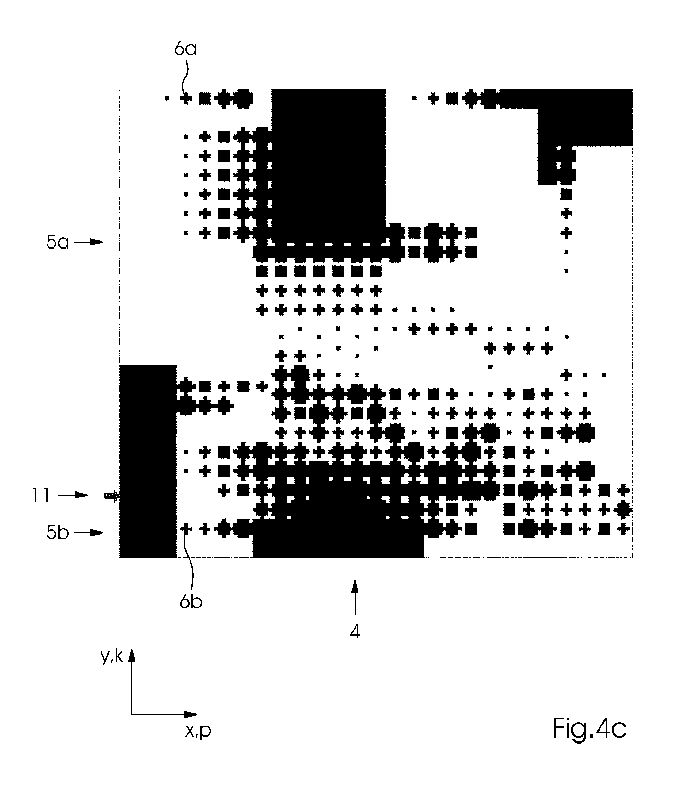

**Figur 4c** zeigt (vergleichbar Figur 3c) dasselbe Druckbild 4, jedoch sind die Teile der potentiellen hellen Linie nun nicht mehr dunkel hervorgehoben, so dass erkennbar wird, wie die potentielle helle Linie für das menschliche Auge in ihrer Wahrnehmbarkeit reduziert ist. Wie in Figur 3c ist der Vorteil der Erfindung hier gut zu erkennen.

### Bezugszeichenliste

- 1a, 1b: Tintenstrahl-Köpfe
- 2a, 2b: Düsenfelder
- 2a', 2b': Felder druckender Düsen
- 3a, 3b: Düsen
- 4: Druckbild
- 4': Datensatz
- 5: Objekt
- 5a, 5b: Abschnitte
- 5a', 5b': Datensätze
- 6a, 6b: Druckpunkte
- 7: Überlapp-Bereich
- 7': Datensatz
- 8: Korrekturzone
- 9: Aktor
- 10: Steuerung
- 11: Anschluss-Stelle
- 12: heller Bereich
- 13: dunkler Bereich

- 100: Verfahrensschritt (Vorbereiten)
- 101: Verfahrensschritt (Bereitstellen)
- 102: Verfahrensschritt (Segmentieren)
- 103: Verfahrensschritt (Bestimmen der absoluten Minima)
- 104: Verfahrensschritt (Erstellen der Korrektur-Datensätze)

- x: Richtung
- y: Richtung

## Patentansprüche

1. **Verfahren** zum Erzeugen eines aus Abschnitten zusammengesetzten Druckbildes auf einem zu bedruckenden Objekt mit mindestens zwei Tintenstrahl-Druckköpfen, wobei das Druckbild (4) in einer - zur Förderrichtung (x) des Objekts (5) unter einem festen, von 0° und 180° verschiedenen Winkel verlaufenden - y-Richtung aus einem ersten und einem zweiten Druckbild-Abschnitt (5a, 5b) zusammengesetzt ist, wobei ein erster Druckkopf (1a) mit ersten Tintenstrahl-Düsen (3a) Druckpunkte (6a) des ersten Abschnitts (5a) und ein zweiter Druckkopf (1b) mit zweiten Tintenstrahl-Düsen (3b) Druckpunkte (6b) des zweiten Abschnitts (5b) erzeugt, wobei die beiden Abschnitte (5a, 5b) in einem Überlapp-Bereich (7) teilweise überlappen und potentiell eine helle oder dunkle Linie (11) bilden,
**gekennzeichnet durch die weiteren Schritte:**
dass für jede der in y-Richtung verlaufenden Spalten (j = 1 bis p) von Druckpunkten (6a, 6b) ein erstes Feld (2a') druckender Tintenstrahl-Düsen des ersten Druckkopfes (1a) und ein - sich an das erste Feld (2a') anschließendes - komplementäres zweites Feld (2b') druckender Tintenstrahl-Düsen des zweiten Druckkopfes (1b) bestimmt wird, wobei für jede der in y-Richtung verlaufenden Spalten von Druckpunkten (6a, 6b) der Anschluss (11) der beiden Felder (2a', 2b') im Überlapp-Bereich (7) in einen hellen oder dunklen Bereich (12, 13) der Spalte gelegt wird.

2. Verfahren nach Anspruch 1,
**dadurch gekennzeichnet,**
**dass** für jede oder zumindest die meisten der in y-Richtung verlaufenden Spalten (j) von Druckpunkten (6a, 6b) der Anschluss (11) in den absolut hellsten oder dunkelsten Bereich (12, 13) der Spalte oder in den größten zusammenhängenden hellen oder dunklen Bereich (12, 13) der Spalte gelegt wird.

3. Verfahren nach Anspruch 2,
**dadurch gekennzeichnet,**
**dass** zum Bestimmen des absolut hellsten oder dunkelsten Bereichs (12, 13) der Spalte (j) oder des größten zusammenhängenden hellen oder dunklen Bereichs (12, 13) der Spalte (j) eine Analyse (102, 103) der Bilddaten (4') des Druckbildes (4), insbesondere im Überlapp-Bereich (7) erfolgt.

4. Verfahren nach Anspruch 3,
**dadurch gekennzeichnet,**
**dass** zum Bestimmen des absolut hellsten oder dunkelsten Bereichs (12, 13) der Spalte (j) oder des größten zusammenhängenden hellen oder dunklen Bereichs (12, 13) der Spalte (j) eine Segmentierung (102) erfolgt.

5. Verfahren nach Anspruch 2, 3 oder 4,
**dadurch gekennzeichnet,**
**dass** zum Vermeiden des Entstehens von wahrnehmbaren Ortsfrequenzen und/oder anderer wahrnehmbarer Störungen für einige Spalten (j) von Druckpunkten (6a, 6b) der Anschluss (11) der beiden Felder (2a', 2b') im Überlapp-Bereich (7) in den zweit oder dritt hellsten oder dunkelsten Bereich (12, 13) der Spalte oder in den zweit oder dritt größten zusammenhängenden hellen oder dunklen Bereich (12, 13) der Spalte gelegt wird.

6. Verfahren nach Anspruch 3 oder 4,
**dadurch gekennzeichnet,**
**dass** die hellen oder dunklen Bereiche (12, 13) aufeinander folgender Spalten (j) nach einer vorgegebenen Funktion, insbesondere nach einer Sinusfunktion ausgewählt werden.

7. Verfahren nach Anspruch 3 oder 4,
**dadurch gekennzeichnet,**
**dass** die hellen oder dunklen Bereiche (12, 13) aufeinander folgender Spalten (j) stochastisch ausgewählt werden.

8. Verfahren nach Anspruch 1,
**dadurch gekennzeichnet,**
**dass** in Volltonbereichen des Druckbildes (4) der Anschluss der beiden Felder im Überlapp-Bereich (7) stochastisch gelegt wird.

9. Verfahren nach Anspruch 1,
**dadurch gekennzeichnet,**
**dass** das Verfahren iterativ durchgeführt wird, bis keine wahrnehmbaren Störungen mehr vorliegen.

10. Verfahren nach Anspruch 1,
**dadurch gekennzeichnet,**
**dass** das Verfahren beim Drucken mehrfarbiger Druckbilder für jeden Farbauszug separat durchgeführt wird und geprüft wird, ob beim Überlagern der Druckbilder (4) wahrnehmbare Störungen entstehen.
